Europäisches Patentamt

(19) European Patent Office

Office européen des brevets

(11) Publication number: **0 344 227 B1**

## (12) EUROPEAN PATENT SPECIFICATION

(45) Date of publication of patent specification: **03.11.93**  (51) Int. Cl.⁵: **H03F  1/30**

(21) Application number: **88908035.4**

(22) Date of filing: **23.08.88**

(86) International application number:
**PCT/US88/02937**

(87) International publication number:
**WO 89/02189 (09.03.89 89/06)**

(54) **TEMPERATURE COMPENSATED LOGARITHMIC AMPLIFIER.**

(30) Priority: **26.08.87 US 89707**
**23.03.88 US 171977**

(43) Date of publication of application:
**06.12.89 Bulletin  89/49**

(45) Publication of the grant of the patent:
**03.11.93 Bulletin  93/44**

(84) Designated Contracting States:
**DE FR GB**

(56) References cited:
**CH-A- 504 136      CH-A- 515 653
US-A- 3 011 130      US-A- 3 329 836
US-A- 3 700 918      US-A- 3 845 326
US-A- 4 232 233      US-A- 4 604 532**

(73) Proprietor: **EASTMAN KODAK COMPANY (a
New Jersey corporation)
343 State Street
Rochester New York 14650(US)**

(72) Inventor: **MOORE, Leslie, Gerald, Jr.
576 Bending Bough Drive
Webster, NY 14580(US)**

(74) Representative: **Parent, Yves
Kodak-Pathé
Département Brevets et Licences
Centre de Recherches et de Technologie
Zone Industrielle
F-71102 Chalon-sur-Saône Cédex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

**Description**

Technical Field

The present invention relates to temperature compensated logarithmic amplifiers suitable for use with video signals.

Background Art

A variety of different techniques exist for providing a logarithmic operation on an input voltage video signal. One of the most common approaches is to use a diode connected in the feedback path of an operational amplifier. The output voltage of such a combination is a logarithmic function. The bandwidth range of logarithmic amplifiers of this type is limited by a number of independent factors, including the open loop gain of the operational amplifier.

The bipolar transistor as is well known has an inherent logarithmic characteristic defined in equation (1).

$$(1) \quad I_c = I_s e^{\frac{V_{BE}}{V_t}}$$

Taking the natural log:

$$(2) \quad V_{BE} = V_t(\ln I_c - \ln I_s)$$

where

$V_{BE}$ = base to emitter voltage
$V_t$ = $\frac{KT}{q}$ (thermal voltage)
$I_c$ = collector current
$I_s$ = saturation leakage current (temperature dependent)

Equation (2) shows the problem of using bipolar transistors to perform a logarithmic operation; namely, $I_s$ and $V_t$ are temperature dependent and provide separate and distinct temperature effects.

In the prior art, U.S. Patent No. 3,845,326 discloses a logarithmic amplification circuit that includes a logarithmic transfer circuit for producing a video output voltage which is a logarithmic function of a video input voltage, and which also includes a feedback circuit for sampling the video output voltage during the horizontal blanking interval, comparing the sampled voltage to a reference voltage, and developing an error correction signal which is fed back to the input of the logarithmic transfer circuit. This is done during the horizontal blanking interval to correct the black level of the video input signal. Temperature compensation is accomplished by maintaining the logging circuits in a constant temperature enclosure. U.S. Patents 3,700,918 and 4,232,233 disclose logarithmic amplification circuits, where matched circuit components are used to achieve a degree of temperature compensation. The prior art does not disclose a bipolar configuration for temperature compensation of both $I_s$ and $V_t$ in a video logging application.

Summary of the Invention

The object of this invention is to provide a logarithmic amplifier which uses bipolar transistors and is compensated for $I_s$ and $V_t$ and has temperature compensated D.C. stabilization.

This object is achieved by a DC stabilized logarithmic amplifier which in response to an input video signal $V_{in}$ having blanking and picture intervals provides a logarithmic signal $V_{out(comp)}$ compensated for the temperature dependencies of the thermal voltage $V_t$ and the saturation leakage current $I_s$, comprising:

a. a logarithmic amplifier cell (16) having first and second matched bipolar transistors with their bases connected such that the first transistor ($Q_1$) logs a current $I_c$ present on its collector and the second transistor ($Q_2$) compensates for $I_s$, and a third transistor ($Q_3$) connected in serves with the second transistor ($Q_2$) for providing a constant collector current $I_{REF}$ through the second transistor ($Q_2$), the output voltage $V_{out}$ being produced at the junction of the second and third transistors ($Q_2$ and $Q_3$), and;

b. feedback means including:

i. a voltage to current convertor (12) responsive to both $V_{in}$ and an error signal to provide the collector current $I_c$ for the first transistor ($Q_1$) during picture information intervals;

ii. means (13, 18) for producing a black reference current $I_{BLK}$ and for summing such $I_{BLK}$ current with the output of said voltage to current convertor (12) during the blanking interval to provide the collector current $I_c$ during blanking for the first transistor ($Q_1$);

c. a clamp feedback circuit (14) producing the error signal applied to the voltage to current convertor (12), said clamp feedback circuit (14) comparing $V_{out}$ with a zero volt reference during the blanking interval to adjust the error signal so that $I_c$ equals $I_{REF}$ thereby providing temperature compensated D.C. stabilization for $V_{out}$; and

d. a $I/V_t$ amplifier (17) responsive to $V_{out}$ for correcting the thermal voltage $V_t$ to provide a compensated voltage $V_{out(comp)}$ during the picture interval.

## Brief Description of the Drawings

Fig. 1 is a block diagram of a logarithmic amplifier in accordance with the invention;

Fig. 2 depicts waveforms for signal parameters shown in Fig. 1; and

Fig. 3 is a schematic diagram of the logarithmic amplifier cell shown in Figure 1.

## Mode of Carrying Out The Invention

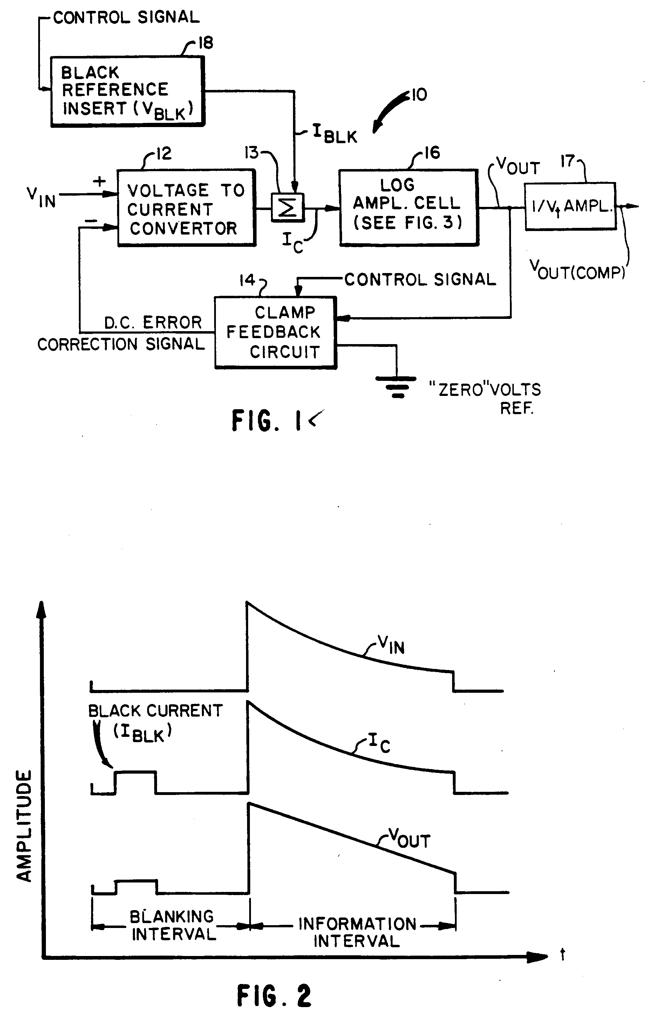

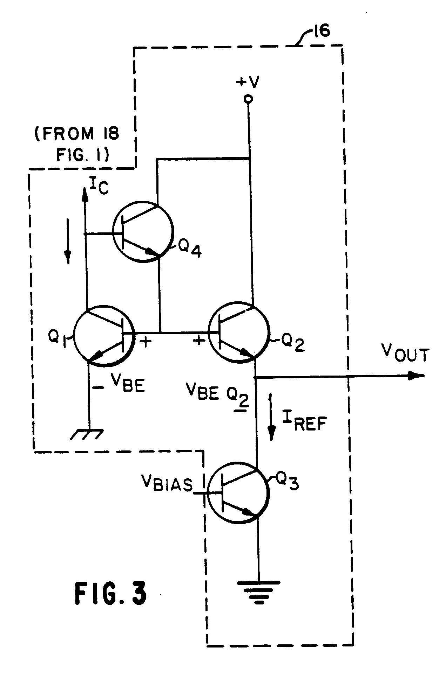

Turning now to Fig. 1 which shows a block diagram of a logarithmic amplifier 10 in accordance with the invention. The input voltage signal $V_{in}$ is applied to a voltage to current convertor 12. An error signal produced by a clamp feedback circuit 14 is also applied to the voltage to current convertor 12. The output of the voltage to current convertor 12 is applied to a summing circuit 13 which produces the collector current $I_c$ used to drive a logging transistor $Q_1$ in a log amplifier cell 16. See Fig. 3. The voltage to current convertor 12 does not require accurate DC offset stabilization due to the use of the feedback clamp circuit 14. During blanking, the summing circuit 13 receives a DC reference current $I_{BLK}$ produced by a black reference insert circuit 18. $I_{BLK}$ reference current is selected so that as shown in Fig. 2 the output $V_{out}$ and also $V_{out(comp)}$ (not shown) are straight line functions in response to an exponential $V_{in}$. The clamp feedback circuit (14) samples the output voltage $V_{out}$ during a blanking interval of the input video voltage signal $V_{in}$ and adjusts the DC correction error signal, so as to change the value of $I_c$ in a manner which will be described later. See Fig. 2. The feedback clamp circuit 14 continuously provides the same error signal to the voltage to current convertor 12 during the picture information interval. This signal is only adjusted during the blanking interval. The feedback clamp circuit 14 generates the DC correction error signal by comparing the signal $V_{out}$ with a zero volt reference. Fig. 2 shows several representative wave forms of signals $V_{in}$, $I_c$, and $V_{out}$. The input voltage $V_{in}$, in linear space, includes a blanking interval and picture information interval. The output of the voltage to current convertor ($I_c$) is also in the linear space. During the blanking interval, a control signal causes the black reference insert circuit 18 to add in a current $I_{BLK}$ and a control signal causes the clamp feedback circuit 14 to sample $V_{out}$ of the log amplifier cell 16 and adjust the D.C. error signal provided to the voltage to current convertor 12. The arrangement to temperature compensate for $I_S$ will now be described in connection with the circuit shown in Fig. 3.

As shown in Fig. 3, two matched bipolar transistors $Q_1$ and $Q_2$ have their bases connected. Collector current for the logging transistor $Q_1$ is the current $I_c$ produced by the voltage to current convertor 12. A fixed reference voltage $V_{BIAS}$ is applied to the base of the transistor $Q_3$ which is connected to the transistor $Q_2$. The transistor $Q_3$ provides a constant current source and produces a constant collector current $I_{REF}$ which is a function of the level of $V_{BIAS}$. $I_{REF}$ is the emitter current and approximately the collector current for transistor $Q_2$. The output $V_{out}$ is taken at the junction of the emitter of transistor $Q_2$ and the collector of transistor $Q_3$. A transistor $Q_4$ is connected so that its collector is coupled to the positive potential V. This same potential is applied to the collector of transistor $Q_2$. The emitter of transistor $Q_4$ is electrically connected to the base of both the matched transistors $Q_1$ and $Q_2$. The input current $I_c$ also provides driving current through the base of the transistor $Q_4$. This particular circuit arranging is such that the output voltage $V_{out}$ is compensated for $I_S$. A conventional $I/V_t$ amplifier 17 compensates for $V_t$ and produces the output signal $V_{out(comp)}$. The operation of amplifier 17 will be discussed later.

The operation of the log cell 16 will now be described. First, $I_S$ of the logging transistor $Q_1$ is assumed to be the same as $I_S$ for the matching transistor $Q_2$. By Kirchoff's voltage law:

$$(3)\quad V_{out} = V_{BE\,Q_1} - V_{BE\,Q_2}$$

From Equation (1):

$$(4) \quad V_{out} = V_t \, (\ln I_c - \ln I_{REF} - \ln I_{SQ_1} + \ln I_{SQ_2})$$

or

$$(5) \quad V_{out} = V_t \, (\ln I_c - \ln I_{REF})$$

Equation (4) demonstrates that the output voltage $V_{out}$ has been temperature compensated for $I_S$. During the blanking interval the clamping feedback circuit 14 in response to the control signal samples the output voltage $V_{out}$ to adjust the error signal. By using a "0" reference voltage as an input to circuit 14 and comparing it with $V_{out}$, $I_c$ is forced to equal $I_{REF}$. $I_c$ during such interval is equal to $I_{BLK}$ since $V_{in}$ is equal to zero. Since $I_c$ equals $I_{REF}$, from Equation 5, $V_{out}$ is made equal to zero and $V_{out}$ is D.C. stabilized. The current $I_{REF}$ is a constant.

During blanking at the output of the log cell 16 $V_{out}$ includes a $V_t$ term. With the equation (5) being set equal to zero, and $I_c = I_{REF}$ the value of $V_t$ is irrelevant and will not affect the clamping operation. Thus the clamping operation is unaffected by both $I_S$ and $V_t$. $I_S$ is removed and $V_t$ is forced to be irrelevent by equation (5) being set equal to zero. This is what is meant by temperature compensated D.C. stabilization for $V_{out}$. The $1/V_t$ compensated amplifier 17 is required to compensate for $V_t$ on the $V_{out}$ signal and produces $V_{out(comp)}$. Amplifier 17 has a gain which is dependent on $1/V_t$. This gain can be accomplished as will be understood to these skilled in the art by including transistors matched to log transistor $Q_1$. Its offset voltage drift need not be specified and is not of a concern because of the location at the clamp feedback circuit 14.

In operation during the picture interval, increasing the current $I_c$ causes $V_{out(comp)}$ to increase. Similarly, when $I_c$ decreases, $V_{out(comp)}$ decreases. $V_{out(comp)}$ is compensated for $I_S$ and $V_t$.

## Industrial Applicability And Advantages

In many applications, it is necessary to provide a logarithmic operation on an analog video signal. This amplifier effectively compensates for $I_S$ and $V_t$.

## Claims

1. A D.C. stabilized logarithmic amplifier (10) which in response to an input video signal $V_{in}$ having blanking and picture intervals provides a logarithmic signal $V_{out(comp)}$ compensated for the temperature dependencies of the thermal voltage $V_t$ and the saturation leakage current $I_s$, comprising:

   a. a logarithmic amplifier cell (16) having first and second matched bipolar transistors with their bases connected such that the first transistor ($Q_1$) logs a current $I_c$ present on its collector and the second transistor ($Q_2$) compensates for, $I_s$, and a third transistor ($Q_3$) connected in series with the second transistor ($Q_2$) for providing a constant collector current $I_{REF}$ through the second transistor ($Q_2$), the output voltage $V_{out}$ being produced at the junction of the second and third transistors ($Q_2$ and $Q_3$), and;

   b. feedback means including:

   i. a voltage to current convertor (12) responsive to both $V_{in}$ and an error signal to provide the collector current $I_c$ for the first transistor ($Q_1$) during picture information intervals;

   ii. means (13, 18) for producing a black reference current $I_{BLK}$ and for summing such $I_{BLK}$ current with the output of said voltage to current convertor (12) during the blanking interval to provide the collector current $I_c$ during blanking for the first transistor ($Q_1$);

   c. a clamp feedback circuit (14) producing the error signal applied to the voltage to current converter (12), said clamp feedback circuit (14) comparing $V_{out}$ with a zero volt reference during the blanking interval to adjust the error signal so that $I_c$ equals $I_{REF}$ thereby providing temperature compensated D.C. stabilization for $V_{out}$; and

   d. a $1/V_t$ amplifier (17) responsive to $V_{out}$ for correcting the thermal voltage $V_t$ to provide a compensated voltage $V_{out(comp)}$ during the picture interval.

**Patentansprüche**

1.  Gleichstromstabilisierter logarithmischer Verstärker (10), der in Abhängigkeit von einem Dunkeltast- und Bildperioden enthaltenden Eingangsvideosignal $V_{in}$ ein hinsichtlich der Temperaturabhängigkeit der Thermospannung $V_t$ sowie des Sättigungsleckstroms $I_s$ kompensiertes logarithmisches Signal $V_{out(comp)}$ liefert,
    gekennzeichnet durch
    a) eine logarithmische Verstärkerzelle (16) mit einem bipolaren Transistorpaar, dessen jeweilige Basis derart geschaltet ist, daß der erste Transistor ($Q_1$) einen an seinem Kollektor anliegenden Strom $I_c$ logarithmiert und der zweite Transistor ($Q_2$) den Sättigungsleckstrom $I_s$ kompensiert, und mit einem mit dem zweiten Transistor ($Q_2$) in Reihe geschalteten dritten Transistor ($Q_3$), der einen konstanten Kollektorstrom $I_{REF}$ durch den zweiten Transistor liefert, wobei die Ausgangsspannung $V_{out}$ am Schaltungspunkt zwischen dem zweiten und dritten Transistor ($Q_2$ und $Q_3$) erzeugt wird;
    b) Gegenkoppelungsmittel, bestehend aus:
    - einem Spannungs-/Strom-Wandler (12), der sowohl auf $V_{in}$ als auch auf ein Fehlersignal anspricht, um den Kollektorstrom $I_c$ für den ersten Transistor ($Q_1$) während der Bildperioden zu liefern; und
    - Mitteln (13, 18) zum Erzeugen eines Schwarzreferenz-Stroms $I_{BLK}$ und zum Aufsummieren des $I_{BLK}$ zum Ausgangsstrom des Spannungs-/Strom-Wandlers (12) während der Dunkeltastperioden, um während der Dunkeltastung den Kollektorstrom $I_c$ für den ersten Transistor ($Q_1$) zu liefern;
    c) eine Gegenkoppelungsklemmschaltung (14), die das an den Spannungs-/Strom-Wandler (12) angelegte Fehlersignal erzeugt und die Ausgangsspannung $V_{out}$ mit einer Null-Volt-Referenz während der Dunkeltastperiode vergleicht, um das Fehlersignal derart einzustellen, daß $I_c$ und $I_{REF}$ gleich groß sind, so daß eine temperaturkompensierte Gleichstromstabilisierung von $V_{out}$ erfolgt; und
    d) einen $I/V_t$-Verstärker (17), der auf $V_{out}$ anspricht, um die Thermospannung $V_t$ zu korrigieren und eine kompensierte Spannung $V_{out(comp)}$ während der Bildperiode zu liefern.

**Revendications**

1.  Amplificateur logarithmique unipolaire (DC) stabilisé (10) qui, en réponse à un signal vidéo d'entrée $V_{in}$ présentant des intervalles inter-images et des niveaux de suppression "blanking", fournit un signal logarithmique $^V$out (comp) compensé en température par rapport au potentiel thermique $V_t$ et compensé par rapport au courant de fuite à la saturation $I_s$, comprenant :
    a) une cellule (16) d'amplification logarithmique munie d'un premier et d'un second transistor appariés dont les bases sont reliées de manière que le premier transistor ($Q_1$) transmet un courant $I_c$ présent à son collecteur et le second transistor ($Q_2$) compense le courant $I_s$ et d'un troisième transistor ($Q_3$) relié en série avec le second transistor ($Q_2$) pour fournir un courant de collecteur constant $I_{ref}$ traversant le second transistor ($Q_2$), le potentiel de sortie $V_{out}$ étant prélevé à la jonction entre le second et le troisième transistor ($Q_2$ et $Q_3$), et ;
    b) une boucle de réaction comprenant :
    i) un convertisseur (12) tension/courant sensible à la fois au signal d'entrée $V_{in}$ et à un signal d'erreur pour fournir le courant de collecteur $I_c$ pour le premier transistor ($Q_1$) pendant les intervalles de suppression ;
    ii) un moyen (13,18) pour fournir un courant de référence noir $I_{BLK}$ et pour sommer ce courant de référence noir avec le signal de sortie du convertisseur (12) tension/courant pendant l'intervalle de suppression de manière à fournir le courant de collecteur $I_c$ pendant l'intervalle de suppression pour le premier transistor ($Q_1$) ;
    c) un circuit de réaction à fixation de niveau (14) produisant le signal d'erreur appliqué au convertisseur (12) tension/courant, ledit circuit de réaction à fixation de niveau (14) comparant le signal de sortie $V_{out}$ avec un potentiel de référence nul pendant l'intervalle de suppression pour ajuster le signal d'erreur de manière que le courant $I_c$ soit égal au courant de référence $I_{ref}$ et de ce fait fournir un signal de sortie $V_{out}$ continu stabilisé et compensé en température ; et
    d) un amplificateur (17), dont le gain est $1/V_t$, sensible au signal de sortie $V_{out}$ pour corriger le potentiel thermique $V_t$ afin de fournir un signal de sortie $V_{out}$ (comp) compensé pendant l'intervalle interimage.

CONTROL SIGNAL

BLACK
REFERENCE
INSERT (V$_{BLK}$) ~18

$I_{BLK}$

~10

V$_{IN}$ + VOLTAGE TO
CURRENT
CONVERTOR ~12

13~ $\Sigma$ $I_C$

LOG
AMPL. CELL
(SEE FIG. 3) ~16

V$_{OUT}$ 17~

I/V$_t$ AMPL.

V$_{OUT(COMP)}$

D.C. ERROR
CORRECTION SIGNAL

14~ CLAMP
FEEDBACK
CIRCUIT

CONTROL SIGNAL

"ZERO"VOLTS
REF.

**FIG. I<**

AMPLITUDE

V$_{IN}$

BLACK CURRENT
(I$_{BLK}$)

$I_C$

V$_{OUT}$

BLANKING
INTERVAL

INFORMATION
INTERVAL

t

**FIG. 2**

FIG. 3